# EUROPEAN PATENT APPLICATION

(11) **EP 4 741 790 A1**
(43) Date of publication of application: **13.05.2026**
(21) Application number: 25213770.8
(22) Date of filing: 05.11.2025
(51) Int. Cl.: G01M 3/32

(54) **AUTOMATING A PRESSURE DECAY INTEGRITY TEST OF A CONTROLLED ATMOSPHERE OF A REFRIGERATED CONTAINER**

(30) Priority: 07.11.2024 US 202463717520 P
(71) Applicant: Carrier Corporation, Palm Beach Gardens, FL 33418 (US)
(72) Inventor: POSTGATE, Farley, East Syracuse, 13057 (US); BRISSON, David, East Syracuse, 13057 (US); VELTMAN, Rob, Rotterdam 3087BM (NL)
(74) Representative: Dehns

(57) **Abstract**

A method (400) of automating a pressure decay integrity test of a container (10) configured for refrigeration by a transportation refrigeration unit (TRU) is provided. The method (400) includes connecting a controller (70) programmed with an automated pressure decay integrity test of the container (10) to a compressor (26) of the TRU and a pressure transducer (501) installed in the container (10) and executing (406) the automated pressure decay integrity test by the controller (70). The executing (406) includes activating (4061) the compressor (26) to pressurize the container (10), receiving (4062) readings of the pressure transducer (501) and determining (4063), from the readings, whether the automated pressure decay integrity test is passed.

## Description

### BACKGROUND

The present invention relates to refrigerated containers and, more particularly, to automation of a pressure decay integrity test of a controlled atmosphere of a refrigerated container.

A typical refrigerated cargo container, such as those utilized to transport cargo via sea, rail or road, is a container modified to include a refrigeration unit located at one end of the container. The refrigeration unit includes a compressor, a condenser, an expansion valve and an evaporator. A volume of refrigerant circulates throughout the refrigeration unit and one or more evaporator fans of the refrigeration unit blow a flow of supply air across the evaporator thereby cooling the supply air and forcing it out into the container.

### BRIEF DESCRIPTION

According to a first aspect of the invention, a method of automating a pressure decay integrity test of a container configured for refrigeration by a transportation refrigeration unit (TRU) is provided. The method includes connecting a controller programmed with an automated pressure decay integrity test of the container to a compressor of the TRU and a pressure transducer installed in the container and executing the automated pressure decay integrity test by the controller. The executing includes activating the compressor to pressurize the container, receiving readings of the pressure transducer and determining, from the readings, whether the automated pressure decay integrity test is passed.

Optionally, the method further includes recording an indication of whether the automated pressure decay integrity test is passed along with the readings.

Optionally, the executing further includes ceasing operation of the TRU.

Optionally, the executing is completed following pre-trip inspection of the container.

Optionally, the executing is completable prior to loading the container and following the loading of the container.

Optionally, the pressure transducer is installed in a center of the TRU.

Optionally, a precondition of the automated pressure decay integrity test being passed is that gas conditions inside the container are met.

Optionally, the pressure transducer includes a digital hybrid sensor package.

Optionally, the digital hybrid sensor package includes a carbon dioxide sensor, an oxygen sensor, a relative humidity sensor and a pressure sensor and the determining, from the readings, of whether the automated pressure decay integrity test is passed includes using respective readings of the relative humidity sensor and the pressure sensor to compensate for relative humidity and pressure effects on respective readings of the carbon dioxide sensor and the oxygen sensor.

According to a second aspect of the invention, a method of automating a pressure decay integrity test of a container configured for refrigeration by a transportation refrigeration unit (TRU) is provided. The method includes generating an automated pressure decay integrity test of the container, disposing a controller programmed with the automated pressure decay integrity test in signal communication with a compressor of the TRU and a pressure transducer installed in the container and executing the automated pressure decay integrity test by the controller. The executing includes activating the compressor to pressurize the container, receiving readings of the pressure transducer and determining, from the readings, whether the automated pressure decay integrity test is passed.

Optionally, the method further includes recording an indication of whether the automated pressure decay integrity test is passed along with the readings.

Optionally, the executing further includes ceasing operation of the TRU.

Optionally, the executing is completed following pre-trip inspection of the container.

Optionally, the executing is completable prior to loading the container and following the loading of the container.

Optionally, the pressure transducer is installed in a center of the TRU.

Optionally, a precondition of the automated pressure decay integrity test being passed is that gas conditions inside the container are met.

Optionally, the pressure transducer includes a digital hybrid sensor package.

Optionally, the digital hybrid sensor package includes a carbon dioxide sensor, an oxygen sensor, a relative humidity sensor and a pressure sensor and the determining, from the readings, of whether the automated pressure decay integrity test is passed includes using respective readings of the relative humidity sensor and the pressure sensor to compensate for relative humidity and pressure effects on respective readings of the carbon dioxide sensor and the oxygen sensor.

According to a third aspect of the invention, a container system is provided and includes a container configured for refrigeration by a transportation refrigeration unit (TRU), the TRU including a compressor, a pressure transducer installed in the container and a controller programmed with an automated pressure decay integrity test of the container and disposed in signal communication with the compressor and the pressure transducer. The controller is configured to execute the automated pressure decay integrity test by activating the compressor to pressurize the container, receiving readings of the pressure transducer and determining, from the readings, whether the automated pressure decay integrity test is passed.

Optionally, the controller is further configured to record an indication of whether the automated pressure decay integrity test is passed along with the readings.

Optionally, the pressure transducer is installed in a center of the TRU.

Optionally, the pressure transducer includes a digital hybrid sensor package, the digital hybrid sensor package includes a carbon dioxide sensor, an oxygen sensor, a relative humidity sensor and a pressure sensor and the determining, from the readings, of whether the automated pressure decay integrity test is passed includes using respective readings of the relative humidity sensor and the pressure sensor to compensate for relative humidity and pressure effects on respective readings of the carbon dioxide sensor and the oxygen sensor.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein certain exemplary embodiments will be described in greater detail by way of example only, and wherein like reference numerals represent like parts:
FIG. 1 is a perspective view of a refrigerated container;
FIG. 2 is a schematic diagram of a refrigeration unit;
FIG. 3 is a perspective view of a refrigeration unit;
FIG. 4A is a flow diagram illustrating a method of automating a pressure decay integrity test of a container;
FIG. 4B is a graphical illustration of a pressure decay integrity test;
FIG. 4C is a flow diagram illustrating additional features of the method of FIG. 4A;
FIG. 5A is a perspective view of a pressure transducer;
FIG. 5B is a perspective view of components of a container system; and
FIG. 6 is a flow diagram illustrating an exemplary application of a pressure decay integrity test.

### DETAILED DESCRIPTION

In order to confirm the air tightness of a shipping container used for controlled atmosphere cargo, technicians are often required to pressurize the shipping container and record a pressure decay time of the shipping container as pressure leaks out. For certain systems and certain applications, the shipping container is required to hold an initial pressure of 2 IWG (Inch Water Gauge) (500 Pa) and not decay to less than 1 IWG (200 Pa) in less than 4 minutes but execution of this type of test requires a technician to be present and can vary in procedures from operator-to-operator.

Thus, as will be described below, a method of automation of a pressure decay integrity test of a controlled atmosphere of a refrigerated container is provided and uses a pressure transducer with good resolution in the -10 to 10 IWG (-2000 to 2000 Pa) range. An algorithm is created to run with self-diagnostic tests that can correlate to manual pressure decay procedures. An air compressor is used to automatically pressurize the cargo area and the pressure transducer data is used to verify the test specification.

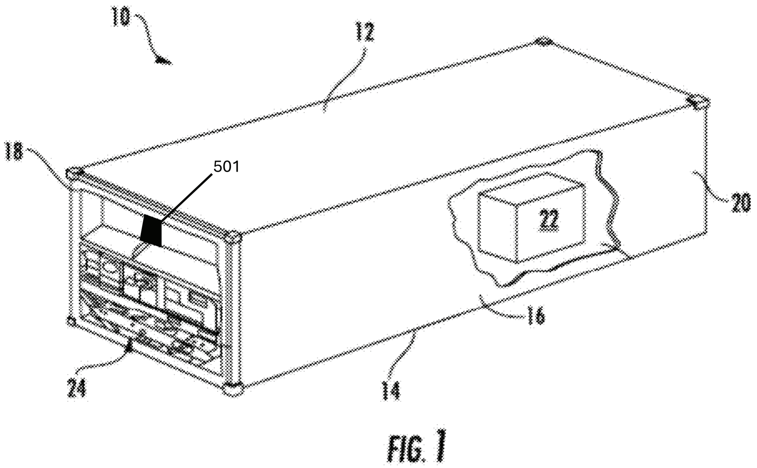

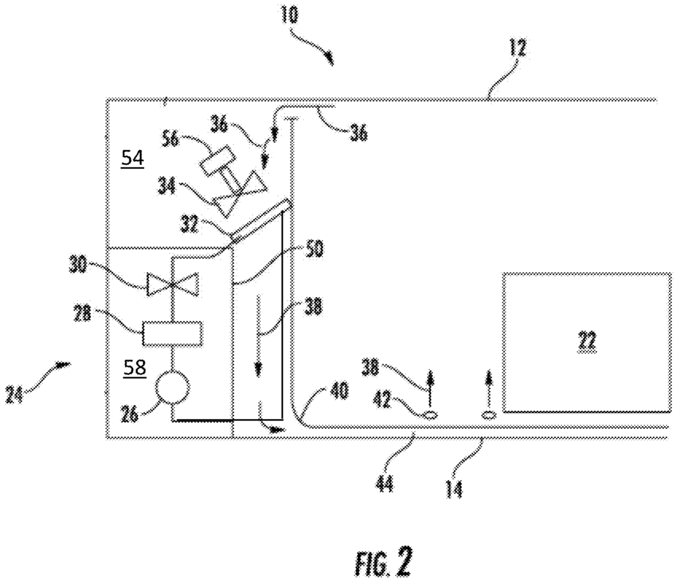

With reference to FIGS. 1 and 2, a refrigerated container 10 is provided with a generally rectangular construction with a top wall 12, a directly opposed bottom wall 14, opposed side walls 16 and a front wall 18. The container 10 further includes a door or doors (not shown) at a rear wall 20 opposite the front wall 18. The container 10 is configured to maintain a cargo 22 located inside the container 10 at a selected temperature through the use of a refrigeration unit 24, i.e., a transportation refrigeration unit (TRU), which is located at the container 10. The container 10 is mobile and is utilized to transport the cargo 22 via, for example, a truck, a train or a ship. The container 10 may be integrated with a trailer or chassis. The refrigeration unit 24 is located at the front wall 18, and includes a compressor 26, a condenser 28, an expansion device 30 (e.g., a TXV or EXV), an evaporator 32 and an evaporator fan 34 as well as other ancillary components.

As shown in FIG. 2, the refrigeration unit 24 flows return air 36 across the evaporator 32 via the evaporator fan 34, thus cooling the return air 36 to a selected temperature and urges the cooled return airflow 36, now referred to as supply air 38, through a refrigeration unit outlet 40 into the container 10 via, for example, openings 42 in one or more T-bars 44 extending along the bottom wall 14 of the container 10 to cool the cargo 22.

The refrigeration unit 24 is separated into an evaporator section 54 containing the evaporator 32, the evaporator fan 34 and an evaporator fan motor 56 and
a condenser section 58 containing the compressor 26, the condenser 28 and the expansion device 30. In some embodiments, the expansion device 30 may be located in the evaporator section 54. The evaporator section 54, located above the condenser section 58 in some embodiments, is separated from the condenser section 58 by a panel 50 that extends across the refrigeration unit 24. The condenser section 58 is exposed to ambient air and may be covered by panels having openings formed therein. In operation, refrigerant is circulated in serial fashion through the compressor 26, the condenser 28, the expansion device 30, the evaporator 32 and back to the compressor 26. It is understood that the refrigeration unit 24 may include additional components (e.g., economizer, receiver, SMV, etc.) that are not shown.

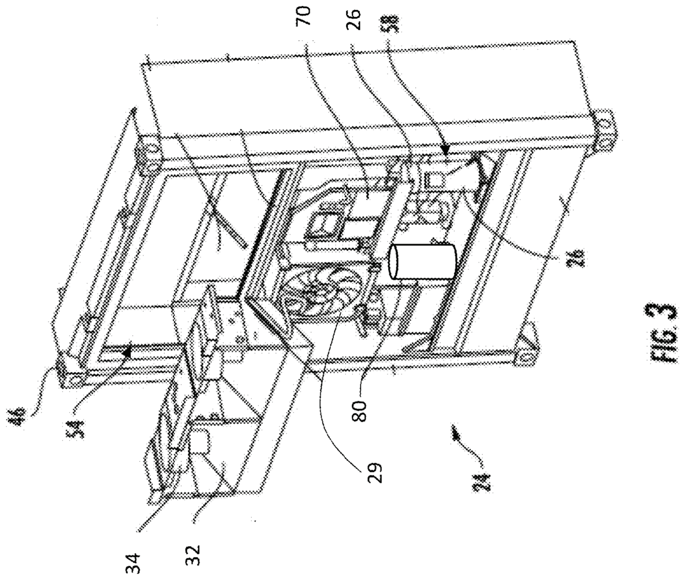

With reference to FIG. 3, the refrigeration unit 24 includes a housing 46 to contain components of the refrigeration unit 24. In some embodiments, the housing 46 is separate and distinct from the container 10, while in other embodiments, the housing 46 is an integral part of the container 10. A condenser fan 29 is driven by a condenser motor (not shown) to drive air over the condenser 28 and discharge the air outside the refrigeration unit 24. The condenser 28 may be radially disposed about the condenser fan 29. A controller 70 controls operation of the refrigeration unit 24, for example, by controlling the compressor 26 (e.g., on/off/variable speed), the evaporator fan motor 56 (e.g., on/off/variable speed), a condenser fan motor (e.g., on/off/variable speed), etc. The controller 70 may be implemented as a processor-based device including a microprocessor, memory, user interface, I/O inputs, etc. The controller 70 controls components of the refrigeration unit 24 to maintain a desired temperature within the interior of the container 10. An air compressor 80 is located in the condenser section 58. The air compressor 80 is a component of an atmosphere control system that operates to regulate atmosphere in the interior of the container 10.

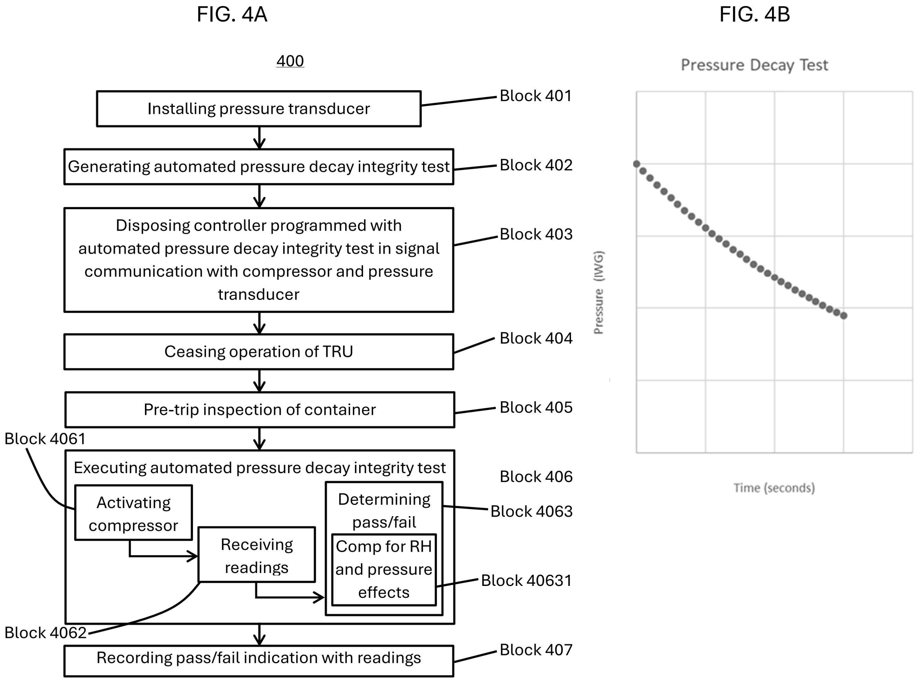

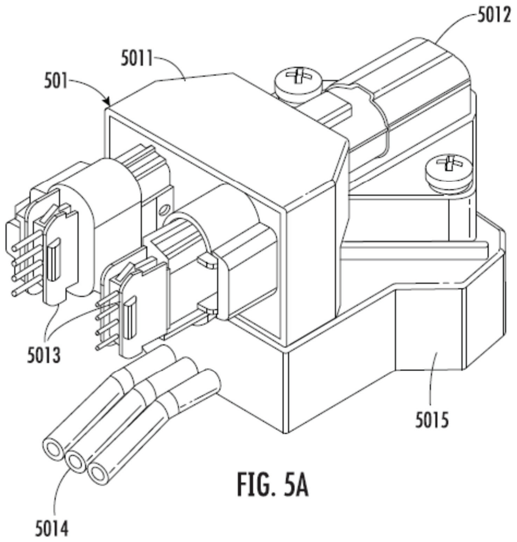

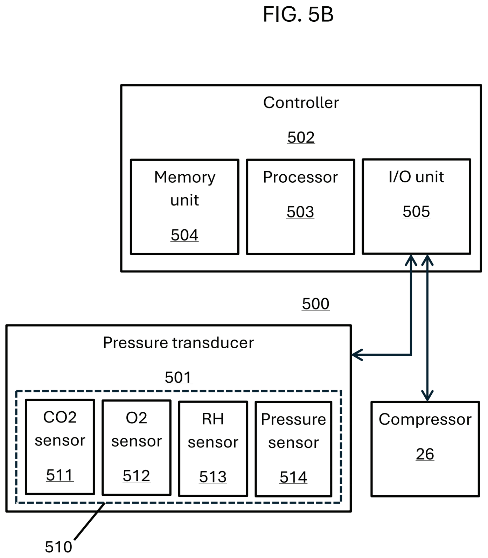

With reference to FIGS. 4A and 4B, a method 400 of automating a pressure decay integrity test of a container configured for refrigeration by a TRU, such as the refrigerated container 10 and the refrigeration unit 24 of FIGS. 1-3. The method 400 includes initially installing a pressure transducer (see pressure transducer 501 of FIG. 1 and FIGS. 5A and 5B) in the container (block 401). In accordance with embodiments, the pressure transducer can be installed in a center of the TRU along a center tube sheet extension above an evaporator coil of the evaporator 32 (see FIG. 1). The method 400 further includes generating an automated pressure decay integrity test of the container (block 402), disposing a controller programmed with the automated pressure decay integrity test in signal communication with a compressor of the TRU and the pressure transducer (block 403), optionally ceasing operation of the TRU (block 404) and executing the automated pressure decay integrity test by the controller (block 406). In some cases, the executing of the automated pressure decay integrity test by the controller of block 405 can be undertaken following pre-trip inspection of the container (block 405) and prior to loading the container and/or following the loading of the container. In addition, the method 400 can include recording an indication of whether the automated pressure decay integrity test is passed along with the readings (block 407).

The executing of the automated pressure decay integrity text by the controller of block 406 can include activating the compressor to pressurize the container up to a certain pressure level whereupon the compressor is shut off (block 4061), receiving readings of the pressure transducer (block 4062) and determining, from the readings, whether the automated pressure decay integrity test is passed (block 4063).

An exemplary execution of the automated pressure decay integrity test of the method 400 is illustrated in FIG. 4B. As shown in FIG. 4B, pressure in the container reaches a high point at the test beginning due to the activation of the compressor. Once a desired pressure level is reached and the compressor shuts off, leakage out of the container causes the pressure to decrease over time and this pressure decrease over time is read by the pressure transducer. After a predefined period of time, if the readings indicate that the pressure in the container is below a certain pressure level, the automated pressure decay integrity test is not passed whereas, if the readings indicate that the pressure in the container is at or above the certain pressure level, the automated pressure decay integrity test is passed.

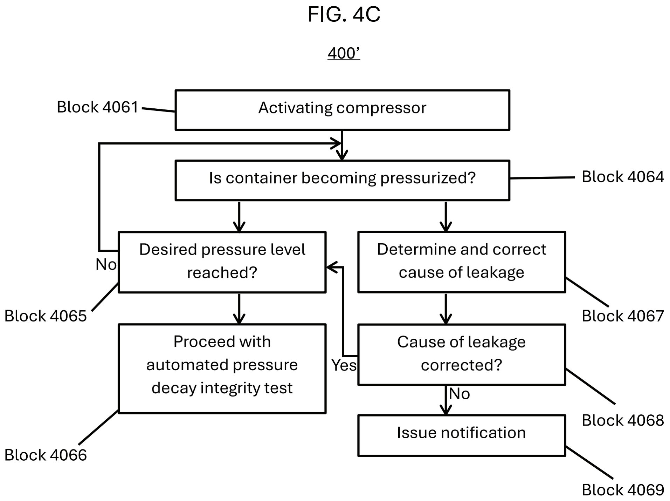

The desired pressure level can be variable based on a number of factors including, but not limited to, one or more of the volume of the container, a desired leaktightness of the container, the power of the compressor and a type of cargo being transported at a given time. In any event, there may be cases in which pressurization to run the automated pressure decay integrity test is not possible or useful due to, for example, the container exhibiting a high degree of leakage (e.g., where a curtain of the container is not mounted properly). In these or other cases, the method 400 of FIG. 4A can be appended with additional operation of method 400' of FIG. 4C. As shown in FIG. 4C, the method 400' begins with the activation of the compressor of block 4061 of FIG. 4A and a determination of whether the container is becoming pressurized (block 4064). If so, the method 400' includes a determination of whether the desired pressure level is reached (block 4065) and, if so, the automated pressure decay integrity test proceeds (block 4066) generally as described above. If not, the pressurizing of the container continues. In an event the determination of whether the container is becoming pressurized indicates that the container is not becoming pressurized at block 4064, the method 400' includes determining and correcting a cause of leakage, such as where the curtain of the container is not mounted properly (block 4067) and a subsequent determination of whether the cause of leakage has been corrected (block 4068). If the cause of the leakage has been corrected, control reverts to the determination of whether the desired pressure level is reached at block 4065 or, if not, a notification of a high leakage container is issued (block 4069).

With continued reference to FIGS. 1, 4A and 4B and with additional reference to FIGS. 5A and 5B, the pressure transducer 501 can include or be provided as a digital hybrid sensor package 510 and/or, in some embodiments, as an RS485 sensor package. In general, the pressure transducer 501 includes wiring for connectors 5011, sensor electronics 5012, power and communication in/out connectors 5013, inlet, exit and gas (N₂) sample ports 5014 and a gas sample mixing box 5015.

Where the pressure transducer 501 includes or is provided as the digital hybrid sensor package 510, the digital hybrid sensor package 510 can include a carbon dioxide sensor 511, an oxygen sensor 512, a relative humidity sensor 513 and a pressure sensor 514. In these or other cases, the determining, from the readings, of whether the automated pressure decay integrity test is passed of block 4063 can include using respective readings of the relative humidity sensor and the pressure sensor to compensate for relative humidity and pressure effects on respective readings of the carbon dioxide sensor and the oxygen sensor (block 40631).

In accordance with embodiments, the carbon dioxide sensor 511 and the oxygen sensor 512 measure partial pressure of the gases they are designed for (C0₂ for the carbon dioxide sensor 511 and O₂ for the oxygen sensor 512). Relative humidity (RH) takes up a certain amount of the partial atmosphere and thus reduces the readings for CO2 and O2 concentrations. The pressure transducer 501 measures pressure deviations from atmospheric pressure, which changes the readings of the partial pressure measurements of the C0₂ and O₂ gases. This information is then used to normalize the readings to data that would be comparable to an atmosphere with no RH or pressure higher than atmospheric gauge.

With continued reference to FIGS. 1, 4A and 4B and with additional reference to FIGS. 5A and 5B, a container system 500 is provided. The container system 500 includes a container 10 (see FIGS. 1 and 2) configured for refrigeration by a TRU, such as the refrigeration unit 24 of FIGS. 1-3. The TRU includes the compressor 26 (see FIG. 2). The container system 500 also includes the pressure transducer 501 (see FIGS. 1, 5A and 5B) installed in the container 10 (i.e., in the center of the TRU along a tube sheet extension above an evaporator coil of the evaporator 32) and a controller 502. As noted above, the pressure transducer 501 can include or be provided as the digital hybrid sensor package 510. Where the pressure transducer 501 includes or is provided as the digital hybrid sensor package 510, the digital hybrid sensor package 510 can include a carbon dioxide sensor 511, an oxygen sensor 512, a relative humidity sensor 513 and a pressure sensor 514.

The controller 502 includes a processor 503, a memory unit 504 and an input/output (I/O) unit 505, by which the processor 503 is disposable in signal communication with the pressure transducer 501 and the compressor 26. The memory unit 504 has programming for an automated pressure decay integrity test of the container 10 and executable instructions stored thereon. The executable instructions are readable and executable by the processor 503. When the executable instructions are read and executed by the processor 503, the processor 503 is caused to execute the automated pressure decay integrity test of the container 10. That is, when the executable instructions are read and executed by the processor 503, the processor 503 is caused to activate the compressor 26 to pressurize the container 10 via the I/O unit 505, to receive readings of the pressure transducer 501 via the I/O unit 505 at least during and after a predefined period of time, such as 1-5 or 4 minutes, and to determine, from the readings, whether the automated pressure decay integrity test is passed and then to record an indication of whether the automated pressure decay integrity test is passed along with the readings.

Where the pressure transducer 501 includes or is provided as the digital hybrid sensor package 510 and the digital hybrid sensor package 510 includes the carbon dioxide sensor 511, the oxygen sensor 512, the relative humidity sensor 513 and the pressure sensor 514, the determining, from the readings, of whether the automated pressure decay integrity test is passed by the processor 503 can include the processor 503 using respective readings of the relative humidity sensor 513 and the pressure sensor 514 to compensate for relative humidity and pressure effects on respective readings of the carbon dioxide sensor 511 and the oxygen sensor 512 as explained above.

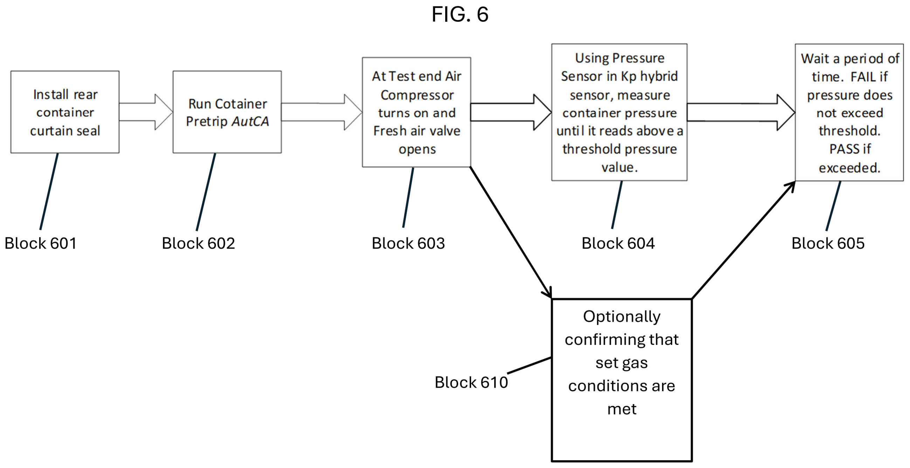

With reference to FIG. 6, an exemplary execution of the automated pressure decay integrity test described above is illustrated as part of an overall test regime. As shown in FIG. 6, a rear container curtain seal for the container is installed (block 601) and a container pre-trip inspection is run (block 602). The automated pressure decay integrity test follows the pre-trip inspection and includes the turning on of the compressor (block 603), the measuring of the container pressure over time (block 604) and the pass-fail determination after a period of time (block 605). It can be seen from FIG. 6 that the automated pressure decay integrity test can be, but is not required to be, tagged on the end of the pre-trip inspection. Also, it is to be understood that the automated pressure decay integrity test may or may not be a criteria for passing the pre-trip inspection (i.e., it can be a data point for reference, documenting container leakiness, in case there are any issues during the controlled atmosphere cargo trip). In accordance with embodiments, the pre-trip inspection can include at least one or more of checking the container for structural damage and/or cleaning T-bars of debris, ensuring that floor drains are sealed, ensuring that a drain hose from an evaporator section is not damaged and/or is filled with water, ensuring that a manual fresh air panel is equipped with collars and that a label is in place, tightening access panel bolts, loading latest container software, etc.

In some cases, leak tightness of a container that is required for generation of correct, product-specific conditions in the container for optimal shipping results the fresh produce, depends on both the oxygen and the carbon dioxide partial pressures. In these or other cases, it may be desirable to choose a commodity for transport with which standard gas conditions are set whereby the passing of the automated pressure decay integrity test depends on gas conditioning. Thus, in accordance with embodiments and as shown in FIG. 6, a precondition of the automated pressure decay integrity test being passed is that gas conditions inside the container are met (block 610).

Technical effects and benefits of the present invention are the provision of a method of automation of a pressure decay integrity test of a controlled atmosphere of a refrigerated container that unencumbers technicians that are relied on to ensure the shipping container box pressure decays meets specifications, that speeds up and increases repeatability for the integrity test, that provides data on all downloads that can easily be verified, that supports stakeholders with legal confirmation that the customer ensured the box integrity prior to loading, that can be performed on a loaded container and that can be used as a run time diagnostic for container integrity.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent to those of ordinary skill in the art without departing from the scope of the invention as claimed. The embodiments were chosen and described in order to best explain the principles of the invention and the practical application, and to enable others of ordinary skill in the art to understand the invention for various embodiments with various modifications as are suited to the particular use contemplated.

While the preferred embodiments of the invention have been described, it will be understood that those skilled in the art, both now and in the future, may make various improvements and enhancements which fall within the scope of the claims which follow. These claims should be construed to maintain the proper protection for the invention first described.

The following additional clauses set out features of the invention which may or may not be presently claimed in this application, but which may form basis for future amendment and/or a divisional application:
1. A method of automating a pressure decay integrity test of a container configured for refrigeration by a transportation refrigeration unit (TRU), the method comprising:
   connecting a controller programmed with an automated pressure decay integrity test of the container to a compressor of the TRU and a pressure transducer installed in the container; and
   executing the automated pressure decay integrity test by the controller, the executing comprising:
      activating the compressor to pressurize the container;
      receiving readings of the pressure transducer; and
      determining, from the readings, whether the automated pressure decay integrity test is passed.
2. The method according to clause 1, further comprising recording an indication of whether the automated pressure decay integrity test is passed along with the readings.
3. The method according to either of clauses 1 or 2, wherein the executing further comprises ceasing operation of the TRU.
4. The method according to any of clauses 1-3, wherein the executing is completed following pre-trip inspection of the container.
5. The method according to any of clauses 1-3, wherein the executing is completable prior to loading the container and following the loading of the container.
6. The method according to any of clauses 1-5, wherein the pressure transducer is installed in a center of the TRU.
7. The method according to any of clauses 1-6, wherein a precondition of the automated pressure decay integrity test being passed is that gas conditions inside the container are met.
8. The method according to any of clauses 1-7, wherein:
   the pressure transducer comprises a digital hybrid sensor package,
   the digital hybrid sensor package comprises a carbon dioxide sensor, an oxygen sensor, a relative humidity sensor and a pressure sensor, and
   the determining, from the readings, of whether the automated pressure decay integrity test is passed comprises using respective readings of the relative humidity sensor and the pressure sensor to compensate for relative humidity and pressure effects on respective readings of the carbon dioxide sensor and the oxygen sensor.
9. A method of automating a pressure decay integrity test of a container configured for refrigeration by a transportation refrigeration unit (TRU), the method comprising:
   generating an automated pressure decay integrity test of the container;
   disposing a controller programmed with the automated pressure decay integrity test in signal communication with a compressor of the TRU and a pressure transducer installed in the container; and
   executing the automated pressure decay integrity test by the controller, the executing comprising:
      activating the compressor to pressurize the container;
      receiving readings of the pressure transducer; and
      determining, from the readings, whether the automated pressure decay integrity test is passed.
10. The method according to clause 9, further comprising recording an indication of whether the automated pressure decay integrity test is passed along with the readings.
11. The method according to either of clauses 9 or 10, wherein the executing further comprises ceasing operation of the TRU.
12. The method according to any of clauses 9-11, wherein the executing is completed following pre-trip inspection of the container.
13. The method according to any of clauses 9-11, wherein the executing is completable prior to loading the container and following the loading of the container.
14. The method according to any of clauses 9-13, wherein the pressure transducer is installed in a center of the TRU.
15. The method according to any of clauses 9-14, wherein a precondition of the automated pressure decay integrity test being passed is that gas conditions inside the container are met.
16. The method according to any of clauses 9-15, wherein:
   the pressure transducer comprises a digital hybrid sensor package,
   the digital hybrid sensor package comprises a carbon dioxide sensor, an oxygen sensor, a relative humidity sensor and a pressure sensor, and
   the determining, from the readings, of whether the automated pressure decay integrity test is passed comprises using respective readings of the relative humidity sensor and the pressure sensor to compensate for relative humidity and pressure effects on respective readings of the carbon dioxide sensor and the oxygen sensor.
17. A container system, comprising:
   a container configured for refrigeration by a transportation refrigeration unit (TRU), the TRU comprising a compressor;
   a pressure transducer installed in the container; and
   a controller programmed with an automated pressure decay integrity test of the container and disposed in signal communication with the compressor and the pressure transducer,
   the controller being configured to execute the automated pressure decay integrity test by:
      activating the compressor to pressurize the container;
      receiving readings of the pressure transducer; and
      determining, from the readings, whether the automated pressure decay integrity test is passed.
18. The container system according to clause 17, wherein the controller is further configured to record an indication of whether the automated pressure decay integrity test is passed along with the readings.
19. The container system according to either of clauses 17 or 18, wherein the pressure transducer is installed in a center of the TRU.
20. The container system according to any of clauses 17-19, wherein:
   the pressure transducer comprises a digital hybrid sensor package,
   the digital hybrid sensor package comprises a carbon dioxide sensor, an oxygen sensor, a relative humidity sensor and a pressure sensor, and
   the determining, from the readings, of whether the automated pressure decay integrity test is passed comprises using respective readings of the relative humidity sensor and the pressure sensor to compensate for relative humidity and pressure effects on respective readings of the carbon dioxide sensor and the oxygen sensor.

## Claims

1. A method (400) of automating a pressure decay integrity test of a container (10) configured for refrigeration by a transportation refrigeration unit (TRU), the method comprising:
connecting a controller (70) programmed with an automated pressure decay integrity test of the container to a compressor (26) of the TRU and a pressure transducer (501) installed in the container; and
executing (406) the automated pressure decay integrity test by the controller, the executing comprising:
activating (4061) the compressor to pressurize the container;
receiving (4062) readings of the pressure transducer; and
determining (4063), from the readings, whether the automated pressure decay integrity test is passed.

2. A method (400) of automating a pressure decay integrity test of a container (10) configured for refrigeration by a transportation refrigeration unit (TRU), the method comprising:
generating (402) an automated pressure decay integrity test of the container;
disposing (403) a controller (70) programmed with the automated pressure decay integrity test in signal communication with a compressor (26) of the TRU and a pressure transducer (501) installed in the container; and
executing (406) the automated pressure decay integrity test by the controller, the executing comprising:
activating (4061) the compressor to pressurize the container;
receiving (4062) readings of the pressure transducer; and
determining (4063), from the readings, whether the automated pressure decay integrity test is passed.

3. The method (400) according to any preceding claim, further comprising recording (407) an indication of whether the automated pressure decay integrity test is passed along with the readings.

4. The method (400) according to any preceding claim, wherein the executing (406) further comprises ceasing operation of the TRU.

5. The method (400) according to any preceding claim, wherein the executing (406) is completed following pre-trip inspection (405) of the container (10).

6. The method (400) according to any of claims 1-4, wherein the executing (406) is completable prior to loading the container (10) and following the loading of the container.

7. The method (400) according to any preceding claim, wherein the pressure transducer (501) is installed in a center of the TRU.

8. The method (400) according to any preceding claim, wherein a precondition of the automated pressure decay integrity test being passed is that gas conditions inside the container are met (610).

9. The method (400) according to any preceding claim, wherein:
the pressure transducer (501) comprises a digital hybrid sensor package (510),
the digital hybrid sensor package comprises a carbon dioxide sensor (511), an oxygen sensor (512), a relative humidity sensor (513) and a pressure sensor (514), and
the determining (4063), from the readings, of whether the automated pressure decay integrity test is passed comprises using respective readings of the relative humidity sensor and the pressure sensor to compensate (40631) for relative humidity and pressure effects on respective readings of the carbon dioxide sensor and the oxygen sensor.

10. A container system (500), comprising:
a container (10) configured for refrigeration by a transportation refrigeration unit (TRU), the TRU comprising a compressor (26);
a pressure transducer (501) installed in the container; and
a controller (70) programmed with an automated pressure decay integrity test of the container and disposed (403) in signal communication with the compressor and the pressure transducer,
the controller being configured to execute (406) the automated pressure decay integrity test by:
activating (4061) the compressor to pressurize the container;
receiving (4062) readings of the pressure transducer; and
determining (4063), from the readings, whether the automated pressure decay integrity test is passed.

11. The container system (500) according to claim 10, wherein the controller (70) is further configured to record (407) an indication of whether the automated pressure decay integrity test is passed along with the readings.

12. The container system (500) according to either of claims 10 or 11, wherein the pressure transducer (501) is installed in a center of the TRU.

13. The container system (500) according to any of claims 10-12, wherein:
the pressure transducer (501) comprises a digital hybrid sensor package (510),
the digital hybrid sensor package comprises a carbon dioxide sensor (511), an oxygen sensor (512), a relative humidity sensor (513) and a pressure sensor (514), and
the determining (4063), from the readings, of whether the automated pressure decay integrity test is passed comprises using respective readings of the relative humidity sensor and the pressure sensor to compensate (40631) for relative humidity and pressure effects on respective readings of the carbon dioxide sensor and the oxygen sensor.
